# EUROPEAN PATENT APPLICATION

(11) **EP 2 501 097 A1**
(43) Date of publication of application: **19.09.2012**
(21) Application number: 10829490.1
(22) Date of filing: 30.09.2010
(51) Int. Cl.: H04L 29/06

(54) **DOMAIN NAME PROCESSING METHOD AND DOMAIN NAME SERVER**

(30) Priority: 16.11.2009 CN 200910180181
(71) Applicant: ZTE Corporation, Shenzhen, Guangdong 518057 (CN)
(72) Inventor: SUN, Wang, Shenzhen Guangdong 518057 (CN)
(74) Representative: Price, Nigel John King
(86) International application number: PCT/CN2010/077515
(87) International publication number: WO 2011/057526

(57) **Abstract**

The present disclosure relates to a domain name processing method and a domain name server. The method comprises: a query request is forwarded to a secondary domain name server of a home domain of a subscriber when the query request for a non-local domain subscriber forwarded by the secondary domain name server of an initiator is received; and a query result is forwarded to the secondary domain name server of the initiator when the query result returned from the secondary domain name server of the home domain of the subscriber is received (104). The present disclosure enables exact division of work of two levels of domain name servers in a domain name server system and strengthens the convenience for data management. The workload is reduced, and the probabilities of redundancy and error of data are also reduced; thus the work efficiency of the domain name server system is improved.

## Description

### TECHNICAL FIELD

The present disclosure relates to a field of domain name processing, and in particular to a domain name processing method and a domain name server.

### BACKGROUND

IP Multimedia Subsystem (IMS) is a subsystem proposed by the 3^{rd} Generation Partnership Project (3GPP) in release R5 version for supporting IP multimedia service; the core feature of IMS is to apply Session Initiation Protocol (SIP) and access independence. IMS is the development direction of the next generation core communication network framework; the system enables operators to be committed to launching applications, without spending much time on a perpendicular access technology. IMS initiates a new era of communication field, and its convergence solution would facilitate breaking through a barrier between a fixed-line network and a mobile telephone network. Both the operator and an equipment supplier consider that IMS is an optimum choice for the next generation communication network to realize great convergence; IMS solution is playing a more and more important role in New Generation Network (NGN).

In an IMS core network, E.164 Number/Domain Name Server (ENUM/DNS) provides, in the domain in which ENUM/DNS is located, three formats of data query service, i.e., Naming Authority Pointer (NAPTR), Service Location (SRV), and Address (A) query, wherein the three formats of query are performed in turn: firstly, an ENUM/DNS server performs an NAPTR query to obtain a domain name, then performs an SRV query to obtain information such as the name of a host providing service and the like, and finally performs A query to obtain an IP address of the host providing service. In this way, an IMS network element may perform subsequent process of the call or other service according to the obtained IP address of the host.

In the IMS core network, volumes of both telephone numbers of subscribers and the corresponding domain name address are huge, while different provinces have different domain names. Therefore, in the present ENUM/DNS server system, a primary ENUM/DNS server is set nationally to perform query process of a telephone number in a nation, and a secondary ENUM/DNS server is set in each region (province) respectively to perform query process of a telephone number in the local domain. When the secondary ENUM/DNS server in the local domain cannot perform the query process of a telephone number, for example, the secondary ENUM/DNS server in the local domain cannot perform query process of a non-local domain telephone number when a local domain subscriber calls the non-local domain subscriber, the secondary ENUM/DNS server forwards the query process to the primary ENUM/DNS server who can perform the query process.

The primary ENUM/DNS server needs to possess query process capability that all the secondary ENUM/DNS servers have already possessed, and back up telephone numbers of all subscribers of the nation and the corresponding domain name information; since data volume is very huge, probabilities of redundancy and error of data are greatly increased during the query process, and information inconsistency or information non-synchronization is easy to occur.

When the secondary ENUM/DNS server in each region of the nation cannot perform the query process of a telephone number, the secondary ENUM/DNS server fails to locate another secondary ENUM/DNS server which can process the query of the telephone number, such that the primary ENUM/DNS server and the secondary ENUM/DNS server cannot perform the telephone number query process by explicit collaboration and division of work, which not only causes extreme waste of resources, but also greatly reduces working efficiency of the whole server system.

### SUMMARY

In view of the above problem, a main purpose of the present disclosure is to provide a domain name processing method and a domain name server, for solving the problem of low working efficiency and resource waste in the present ENUM/DNS server system due to inexplicit division of work.

In order to achieve the above purpose, the technical solution of the present disclosure is realized by the following:
The present disclosure provides a domain name processing method, which includes: a query request for a non-local domain subscriber, sent by a secondary domain name server of an initiator, is received; an IP address of a secondary domain name server of a home domain of the subscriber is received according to the query request; the query request is forwarded to the secondary domain name server of the home domain of the subscriber according to the obtained IP address; and a query result returned from the secondary domain name server of the home domain of the subscriber is forwarded to the secondary domain name server of the initiator when the query result is received.

In the above technical solution, the query request may include a telephone number of the subscriber; the step of obtaining the IP address of the secondary domain name server of the home domain of the subscriber according to the query request may specifically include: the IP address of a secondary domain name server of the home domain of the subscriber is found from a stored correspondence table including correspondence between telephone numbers of all subscribers and IP addresses of secondary domain name servers of home domains of all subscribers according to the telephone number included in the query request, so that the IP address is obtained.

In the above technical solution, after the step of forwarding the query request to the secondary domain name server of the home domain of the subscriber and before the query result is received:
a domain name result returned from the secondary domain name server of the home domain of the subscriber may be received, and the domain name result may be forwarded to the secondary domain name server of the initiator;
a received service location query sent by the secondary domain name server of the initiator may be forwarded to the secondary domain name server of the home domain of the subscriber according to the obtained IP address;
a service location result returned from the secondary domain name server of the home domain of the subscriber may be received, and the service location result may be forwarded to the secondary domain name server of the initiator;
a received domain name location query sent by the secondary domain name server of the initiator may be forwarded to the secondary domain name server of the home domain of the subscriber according to the obtained IP address; and
the query result, which is returned from the secondary domain name server of the home domain of the subscriber and includes an IP address of a host providing service in the home domain of the subscriber, may be received.

In the above technical solution, processes of the secondary domain name server of the home domain of the subscriber may include that: after receiving the query request, the secondary domain name server of the home domain of the subscriber performs a domain name query to obtain a domain name result including a domain name of the home domain of the subscriber; after receiving the service location query, the secondary domain name server of the home domain of the subscriber performs a service location query to obtain the service location result including a name of the host providing service in the home domain of the subscriber; and after receiving the domain name location query, the secondary domain name server of the home domain of the subscriber performs the domain name location query to obtain the query result including the IP address of the host providing service in the home domain of the subscriber.

In the above technical solution, the method may further include that, before the step of receiving the query request, sent by the secondary domain name server of the initiator, for the non-local domain subscriber: the secondary domain name server of the initiator receives a query request, including a telephone number of the subscriber, sent from a client terminal; the secondary domain name server of the initiator determines whether the subscriber is a local domain subscriber according to the telephone number included in the query request; when the subscriber is a local domain subscriber, the secondary domain name server of the initiator accomplishes the domain name processing to obtain a query result including an IP address of a host providing service in the local domain and returns the query result to the client terminal; when the subscriber is not a local subscriber, the secondary domain name server of the initiator sends the query request, and returns the query result to the client terminal after receiving a query result.

The present disclosure further provides a domain name server, which includes: a first receiving unit configured to receive a query request, sent by a secondary domain name server of an initiator, for a non-local domain subscriber; an obtaining unit configured to obtain an IP address of a secondary domain name server of a home domain of the subscriber according to the query request received by the first receiving unit; a first forwarding unit configured to forward the query request received by the first receiving unit to the secondary domain name server of the home domain of the subscriber according to the IP address obtained by the obtaining unit; a second receiving unit configured to receive an inquired query result returned by the secondary domain name server of the home domain of the subscriber; and a second forwarding unit configured to forward the query result received by the second receiving unit to the secondary domain name server of the initiator.

In the above technical solution, the query request may include a telephone number of the subscriber; the domain name server may further include a storing unit configured to store a correspondence table including correspondence between telephone numbers of all subscribers and IP addresses of secondary domain name servers of home domains of all subscribers; the obtaining unit may be specifically configured to find the IP address of the secondary domain name server of the home domain of the subscriber from the correspondence table stored in the storing unit according to the telephone number of the subscriber, to obtain the IP address of the secondary domain name server of the home domain of the subscriber.

In the above technical solution, in the domain name server, the first receiving unit may be further configured to receive a service location query sent by the secondary domain name server of the initiator and receive a domain name location query sent by the secondary domain name server of the initiator.

In the above technical solution, in the domain name server, the first forwarding unit may be further configured to forward the service location query received by the first receiving unit to the secondary domain name server of the home domain of the subscriber according to the IP address obtained by the obtaining unit; and forward the domain name location query received by the first receiving unit to the secondary domain name server of the home domain of the subscriber according to the IP address obtained by the obtaining unit.

In the above technical solution, in the domain name server, the second receiving unit may be specifically configured to: receive a domain name result returned from the secondary domain name server of the home domain of the subscriber; receive a service location result returned from the secondary domain name server of the home domain of the subscriber; and receive a query result which is returned from the secondary domain name server of the home domain of the subscriber and includes an IP address of a host providing service in the home domain of the subscriber.

In the above technical solution, in the domain name server, the second forwarding unit may be specifically configured to: forward the domain name result received by the second receiving unit to the secondary domain name server of the initiator; forward the service location result received by the second receiving unit to the secondary domain name server of the initiator; and forward the query result received by the second receiving unit to the secondary domain name server of the initiator.

In the above technical solution, the secondary domain name server of the home domain of subscriber may include: a domain name query processing unit configured to perform a domain name query, after receiving the query request sent by the first forwarding unit, to obtain a domain name result including a domain name of the home domain of the subscriber, and return the domain name result to the second receiving unit of the domain name server; a service location query processing unit configured to perform the service location query process, after receiving the service location query forwarded by the first forwarding unit, to obtain a service location result including a name of a host providing service in the home domain of the subscriber, and return the service location result to the second receiving unit of the domain name server; and a domain name location query processing unit configured to perform the domain name location query process, after receiving the domain name location query forwarded by the first forwarding unit, to obtain a query result including an IP address of the host providing service in the home domain of the subscriber, and return the query result to the second receiving unit of the domain name server.

In the above technical solution, the secondary domain name server of the initiator may include a third receiving unit, a determining unit, a querying unit, a sending unit, a fourth receiving unit, and an another sending unit; wherein the third receiving unit is configured to receive a query request, including a telephone number of the subscriber, sent from a client terminal; the determining unit is configured to determine whether the subscriber is a local domain subscriber according to the telephone number included in the query request received by the third receiving unit, if the subscriber is a local domain subscriber, enable the querying unit, if the subscriber is a non-local domain subscriber, enable the sending unit; the querying unit is configured to perform query process of the query request to obtain the query result; the sending unit is configured to send the query request; the fourth receiving unit is configured to receive the query result; and the another sending unit is configured to send the query result obtained by the querying unit or received by the fourth receiving unit to the client terminal.

The domain name server and the domain name processing method provided by the present disclosure can realize forwarding of the query request and the query result between different domains of the whole nation.

By means of the domain name server and the domain name processing method provided by the present disclosure, the domain name server system of the whole nation can be classified as: a primary domain name server configured to perform the forwarding of the query request and the query result, and each secondary domain name server in each region configured to perform query process of the local domain telephone number. For example, when a local domain subscriber calls a non-local domain subscriber, the query request, sent by the secondary domain name server of the home domain, of the local domain subscriber, and including the telephone number of the non-local domain subscriber, is forwarded through the primary domain name server to the secondary domain name server of the home domain of the non-local domain subscriber, and then the secondary domain name server of the home domain of the non-local domain subscriber performs the telephone number query process of the non-local domain subscriber. The present disclosure can realize explicit division of work for two levels of domain name servers in the system during a query process, thereby not only greatly reducing data storage volume in the primary domain name server and data exchange throughput thereof during processing, increasing convenience for data management, and reducing probabilities of redundancy and error of data, but also making full use of system resource. Consequently, work efficiency of the whole domain name server system is greatly improved.

The present disclosure may be applicable to a field related to the IMS system to facilitate to improve speed of a call between the IMS network elements, improve performance of a whole IMS core network, and provide strong support for wide application of IMS.

### BRIEF DESCRIPTION OF THE DRAWINGS

Fig. 1 shows a flowchart of a domain name processing method according to the present disclosure;
Fig. 2 shows an information exchange diagram of domain name processing during a calling between local IMS subscribers;
Fig. 3 shows an information exchange diagram of domain name processing when a local IMS subscriber calls a non-local IMS subscriber;
Fig. 4 shows an information exchange diagram of domain name processing when a local IMS subscriber calls a local Public Switched Telephone Network (PSTN) subscriber;
Fig. 5 shows an information exchange diagram of domain name processing when a local IMS subscriber calls a non-local PSTN subscriber;
Fig. 6 shows a structure block diagram of a domain name server according to the present disclosure; and
Fig. 7 shows a structure block diagram of a domain name server system.

### DETAILED DESCRIPTION

The specific embodiments of the present disclosure will be illustrated in detail in combination with the accompanying drawings hereinafter.

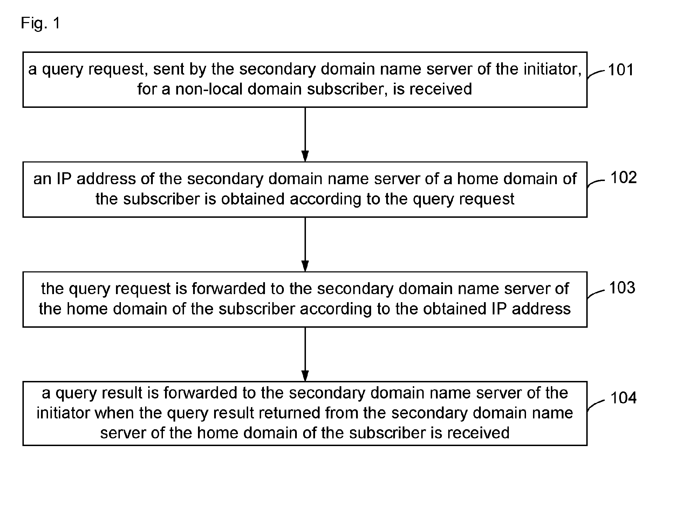

A domain name processing method of the present disclosure is applied to an IMS core network. Referring to Fig. 1, the method mainly comprises:
Step 101: a domain name server receives a query request, sent by a secondary domain name server of an initiator, for a non-local domain subscriber;
Step 102: the domain name server obtains an IP address of a secondary domain name server of a home domain of the subscriber according to the query request;
Step 103: the domain name server forwards the query request to the secondary domain name server of the home domain of the subscriber according to the obtained IP address; and
Step 104: the domain name server forwards a query result to the secondary domain name server of the initiator when the query result returned from the secondary domain name server of the home domain of the subscriber is received.

Both the secondary domain name server of the home domain of the subscriber and the secondary domain name server of the initiator can be implemented by an ENUM/DNS server, which is used for managing information such as telephone numbers of domains where they are located, corresponding domain names and the like.

The query request includes a telephone number of the subscriber; Step 102, the domain name server obtains an IP address of a secondary domain name server of a home domain of the subscriber according to the query request, specifically includes: finding the IP address of the secondary domain name server of the home domain of the subscriber from a correspondence table, stored in the domain name server, including correspondence between telephone numbers of all subscribers and IP addresses of secondary domain name servers of home domains of all subscribers according to the telephone number included in the query request so that the IP address is obtained.

Here, after Step 103 and before Step 104, the method may further include that: the domain name server receives a domain name result returned from the secondary domain name server of the home domain of the subscriber after the secondary domain name server of the home domain of the subscriber receives the query request; the domain name server forwards the domain name result to the secondary domain name server of the initiator; the domain name server receives a service location query sent by the secondary domain name server of the initiator after the secondary domain name server of the initiator receives the domain name result; the domain name server forwards the received service location query to the secondary domain name server of the home domain of the subscriber according to the obtained IP address; the domain name server receives a service location result returned from the secondary domain name server of the home domain of the subscriber after the secondary domain name server of the home domain of the subscriber receives the service location query; the domain name server forwards the service location result to the secondary domain name server of the initiator; the domain name server receives a domain name location query sent by the secondary domain name server of the initiator after the secondary domain name server of the initiator receives the service location result; the domain name server forwards the received domain name location query to the secondary domain name server of the home domain of the subscriber according to the obtained IP address; and the domain name server receives a query result which is returned from the secondary domain name server of the home domain of the subscriber and includes an IP address of a host providing service in the home domain of the subscriber after the secondary domain name server of the home domain of the subscriber receives the domain name location query.

After Step 103 and before Step 104, process of the secondary domain name server of the home domain of the subscriber may include that: after receiving the query request, the secondary domain name server of the home domain of the subscriber performs a domain name query to obtain a domain name result including the domain name of the home domain of the subscriber; after receiving the service location query, the secondary domain name server of the home domain of the subscriber performs a service location query to obtain a service location result including a name of the host providing service in the home domain of the subscriber; after receiving the domain name location query, the secondary domain name server of the home domain of the subscriber performs the domain name location query to obtain the query result including the IP address of the host providing service in the home domain of the subscriber.

The domain name query may specifically include: performing a domain name query of an E.164 Number (ENUM) of the subscriber according to the telephone number of the subscriber in the query request to obtain an E.164 Universal Resource Identifier (URI) of the subscriber.

For example, when a subscriber is called and when a secondary ENUM/DNS server of the home domain of the subscriber receives a query request including a telephone number +861012345678, the secondary ENUM/DNS server converts, according to the ENUM technical standard, the telephone number +861012345678 to obtain a corresponding E.164 number formatted NAPTR record, i.e., 8.7.6.5.4.3.2.1.0.1.6.8.e164.arpa, and finds the NAPTR record, if the NAPTR record exists, the secondary ENUM/DNS server returns a domain name result including the E.164 URI of the subscriber, i.e., sip:+861012345678@ims.bj.china.com, wherein ims.bj.china.com is the domain name of the home domain of the subscriber; if the NAPTR record does not exist, the secondary ENUM/DNS server returns an error response; and then the whole query process is accomplished.

When an initiator of a call does not know a call protocol, the domain name query may further include that: after the secondary ENUM/DNS server of the home domain of the subscriber receives a domain name query including the domain name ims.bj.china.com of the home domain of the subscriber, the secondary ENUM/DNS server of the home domain of the subscriber then resolves the domain name, and returns a result sip._udp.ims.bj.china.com to indicate that the call is based on SIP and User Datagram Protocol (UDP).

The service location query performed after the domain name query may specifically include: performing SRV query of the subscriber according to the obtained URI of the subscriber to obtain the name and the port of the host providing service.

For example, when receiving a service location query including sip._udp.ims.bj.china.com, the secondary ENUM/DNS server of the home domain of the subscriber finds the name and the port of the host capable of providing service in the home domain thereof, and returns a service location result including the name and the port of the host providing service, wherein the service can be a call session control service.

After the service location query, the step that the secondary ENUM/DNS server of the home domain of the subscriber performs the domain name location query may specifically include: obtaining the IP address of the host providing service according to the domain name location query including the name and the port of the host providing service, and returning a query result including the IP address of the host providing service.

Here, before Step 101 of receiving a query request, sent by a secondary domain name server of an initiator, for a non-local domain subscriber, the method may further include that: the secondary domain name server of the initiator receives a query request, including a telephone number of the subscriber, sent from a client terminal; the secondary domain name server of the initiator determines whether the subscriber is a local domain subscriber according to the telephone number included in the query request; when the subscriber is a local domain subscriber, the secondary domain name server of the initiator performs the domain name process to obtain the query result including the IP address of the host providing service in the local domain, and returns the query result to the client terminal; when the subscriber is not a local domain subscriber, the secondary domain name server of the initiator forwards the query request, and returns a query result to the client terminal after receiving the query result.

The specific embodiments of applying the domain name processing method of the present disclosure to a calling between local IMS subscribers, a calling between a local IMS subscriber and a non-local IMS subscriber, a calling between a local IMS subscriber and a local PSTN subscriber, and a calling between a local IMS subscriber and a non-local PSTN subscriber respectively will be illustrated in detail hereinafter.

Firstly, for a calling between local IMS subscribers:

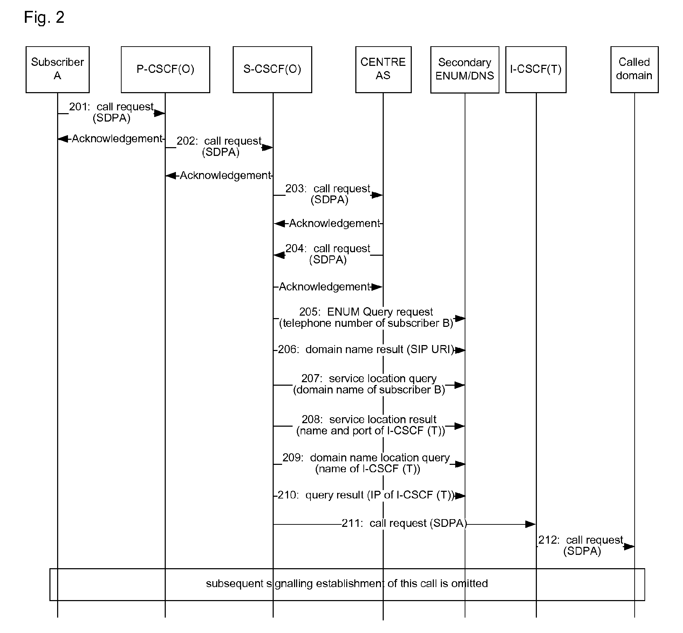

As shown in Fig. 2, both subscriber A and subscriber B are IMS subscribers accessed with a SIP mode, and belong to the same domain. Number segments of telephone numbers of the subscriber A and the subscriber B, corresponding domain names and IP addresses and the like are recorded in the local secondary ENUM/DNS server. The subscriber A and the subscriber B may dial telephone number of each other respectively to communicate, and the secondary ENUM/DNS server of the local domain assists the IMS network elements to accomplish the establishment of a call, wherein the specific flow is as follows:
Step 201 to Step 204: the subscriber A sends a call request (INVITE (SDPA)) message for the subscriber B to a Proxy-Call Session Control Function (P-CSCF) (O) in the home domain of the subscriber A; the P-CSCF (O) then sends the INVITE (SDPA) to a Serving-CSCF (S-CSCF) (O) in the home domain of the subscriber A; the S-CSCF (O) sends the INVITE (SDPA) to a Centrex Application Server (CENTREX AS); the CENTREX AS then returns the INVITE (SDPA) to the S-CSCF (O) in the home domain of the subscriber A after performing a call service process; and the S-CSCF (O) receives the INVITE (SDPA) message returned by the CENTREX AS;
Step 205: the S-CSCF (O) in the home domain of the subscriber A sends an ENUM query request (ENUM Query (B tel)) including a telephone number of the subscriber B to the secondary ENUM/DNS server in the local domain;
Step 206: after receiving the ENUM Query (B tel), the secondary ENUM/DNS server performs a domain name query process, and returns a domain name result (ENUM Resp (SIP URI)) including an E.164 formatted URI of the subscriber B to the S-CSCF (O) in the home domain of the subscriber A;
Step 207: the S-CSCF (O) in the home domain of the subscriber A receives the ENUM Resp (SIP URI), and sends a service location query (SRV Query (SRV domain name)) including the domain name of the subscriber B to the secondary ENUM/DNS server in the local domain;
Step 208: after receiving the SRV Query (SRV domain name), the secondary ENUM/DNS server performs the service location query, and returns a service location result (SRV Resp (B host name and port)) including the name and the port of an Interrogating-CSCF (I-CSCF) (T) providing session call service for the subscriber B;
Step 209: after receiving the SRV Resp (B host name and port), the S-CSCF (O) in the home domain of the subscriber A sends a domain name location query (DNS Query (B host name)) including the name of the I-CSCF (T) for the subscriber B to the secondary ENUM/DNS server;
Step 210: after receiving the DNS Query (B host name), the secondary ENUM/DNS server performs the domain name location query, and returns a query result (DNS Answer (B domain IP)) including an IP address of the I-CSCF (T) for the subscriber B to the S-CSCF (O) in the home domain of the subscriber A;
Step 211: the S-CSCF (O) in the home domain of the subscriber A sends the call request ((INVITE SDPA)) of the subscriber A to the I-CSCF (T) for the subscriber B according to the IP address of the I-CSCF (T) for the subscriber B in the received query result (DNS Answer (B domain IP)); and
Step 212: the I-CSCF (T) for the subscriber B finds the client terminal of the subscriber B, and sends the INVITE SDPA to a called domain of the subscriber B to perform the subsequent process of this call.

For example, if the subscriber B is an E-mail address, the called domain of the subscriber B is a domain name regulated by an E-mail address service supplier.

Secondly, in the condition that a local IMS subscriber calls a non-local IMS subscriber:

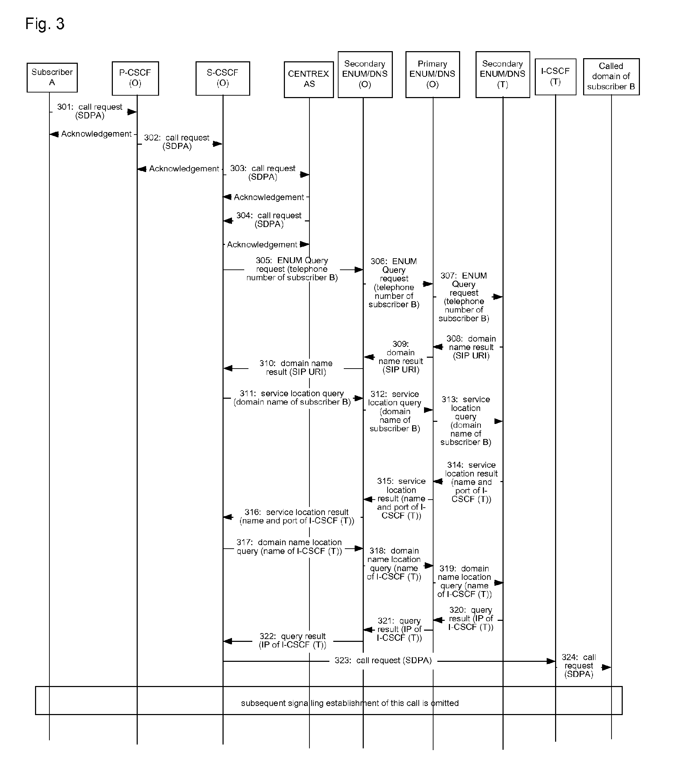

As shown in Fig. 3, both subscriber A and subscriber B are IMS subscribers accessed with SIP mode, and belong to different domains and have different domain names respectively. Number segments of telephone numbers of the subscriber A and the subscriber B, corresponding domain names and IP addresses thereof and the like are respectively stored in secondary ENUM/DNS server of their respective home domains; the IMS subscriber A dials the telephone number of the IMS subscriber B in a different domain to communicate with the subscriber B; the secondary ENUM/DNS server of the home domain of the subscriber A and the secondary ENUM/DNS server of the home domain of the subscriber B, together with the primary ENUM/DNS server used for forwarding a query request and a query result, assist the IMS network elements in accomplishing the establishment of a call, wherein the specific flow is as follows:
Step 301 to Step 305: it is the same as Step 201 to Step 205;
Step 306: the secondary ENUM/DNS server (O) in the home domain of the subscriber A determines that the subscriber B is not a local domain subscriber according to the telephone number of the subscriber B, and then sends an ENUM query request (ENUM Query (B tel)) including the telephone number of the subscriber B to the primary ENUM/DNS server;
Step 307: the primary ENUM/DNS server obtains the IP address of the secondary ENUM/DNS server of the home domain of the subscriber B according to the received number segment of the telephone number of the subscriber B included in the ENUM Query (B tel), and sends the ENUM Query (B tel) to the secondary ENUM/DNS server (T) for the home domain of the subscriber B according to the IP address;
Step 308: the secondary ENUM/DNS server (T) for the home domain of the subscriber B receives the ENUM Query (B tel), performs a domain name query to obtain an ENUM query result (ENUM Resp (SIP URI)) including the E.164 formatted URI of the subscriber B, and returns the query result to the primary ENUM/DNS server;
Step 309: the primary ENUM/DNS server forwards the received ENUM Resp (SIP URI) to the secondary ENUM/DNS server (O) for the home domain of the subscriber A;
Step 310: the secondary ENUM/DNS server (O) for the home domain of the subscriber A sends the received ENUM Resp (SIP URI) to the S-CSCF (O) in the home domain of the subscriber A;
Step 311: the S-CSCF (O) in the home domain of the subscriber A obtains a domain name of the subscriber B according to an SIP URI of the subscriber B included in the ENUM Resp (SIP URI), and sends a service location query (SRV Query (SRV domain name)) including the domain name of the subscriber to the secondary ENUM/DNS server (O) for the home domain of the subscriber A;
Step 312: the secondary ENUM/DNS server (O) for the home domain of the subscriber A forwards the received SRV Query (SRV domain name) to the primary ENUM/DNS server;
Step 313: the primary ENUM/DNS server then forwards the received SRV Query (SRV domain name) to the secondary ENUM/DNS server (T) for the home domain of the subscriber B;
Step 314: after receiving the SRV Query (SRV domain name), the secondary ENUM/DNS server of the home domain of the subscriber B performs a service location query, and returns a service location result (SRV Resp (B host name and port)) including the name and the port of the I-CSCF (T) providing call service for the subscriber B to the primary ENUM/DNS server;
Step 315: the primary ENUM/DNS server forwards the received SRV Resp (B host name and port) to the secondary ENUM/DNS server of the home domain of the subscriber A;
Step 316: the secondary ENUM/DNS server of the subscriber A then sends the received SRV Resp (B host name and port) to the S-CSCF (O) for the subscriber A;
Step 317: the S-CSCF (O) for the subscriber A sends a domain name location query (DNS query (B host name)) including the name of the I-CSCF (T) for the subscriber B to the secondary ENUM/DNS server (O) for the home domain of the subscriber A according to the received SRV Resp (B host name and port);
Step 318: the secondary ENUM/DNS server (O) for the home domain of the subscriber A forwards the received DNS query (B host name) to the primary ENUM/DNS server;
Step 319: the primary ENUM/DNS server then forwards the received DNS query (B host name) to the secondary ENUM/DNS server (T) for the home domain of the subscriber B;
Step 320: the secondary ENUM/DNS server (T) for the home domain of the subscriber B performs a domain name location query according to the received DNS query (B host name) to obtain a query result (DNS Answer (B domain IP)) including the IP address of the I-CSCF (T) for the subscriber B, and returns the query result to the primary ENUM/DNS server;
Step 321: the primary ENUM/DNS server forwards the received DNS Answer (B domain IP) to the secondary ENUM/DNS server (O) for the home domain of the subscriber A;
Step 322: the secondary ENUM/DNS server (O) for the subscriber A then sends the received DNS Answer (B domain IP) to the S-CSCF (O) for the subscriber A; and Step 323 to Step 324: it is the same as Step 211 to Step 212.

Thirdly, in the condition that a local IMS subscriber calls a local PSTN subscriber:

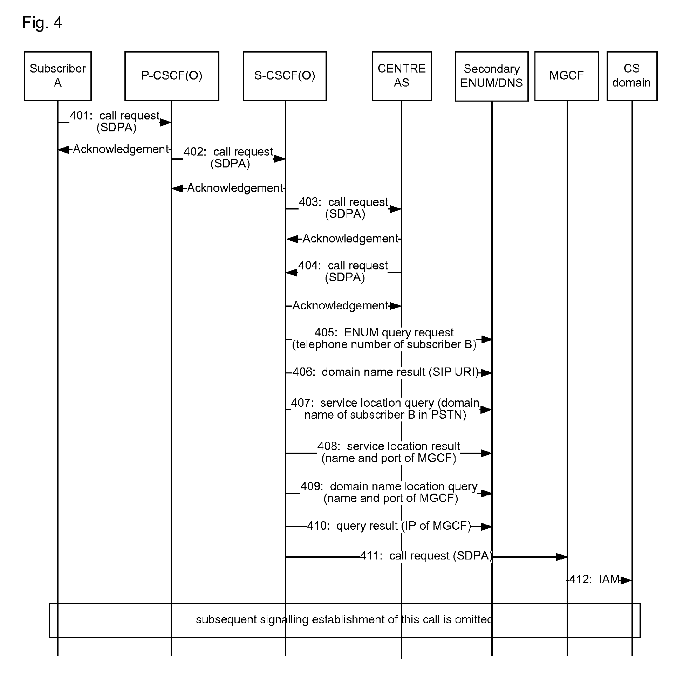

As shown in Fig. 4, a subscriber A is an IMS subscriber accessed with SIP mode, and a subscriber B is a PSTN subscriber which is in the same domain as which the subscriber A is in. When the IMS subscriber calls the local PSTN subscriber, the local secondary ENUM/DNS server assists the IMS network elements to perform determination of called information, and routes the call to a PSTN for the subscriber B, wherein the specific flow is as follows:
Step 401 to Step 410: it is almost the same as Step 201 to Step 210, wherein the differences are as follows:
   the domain name result (ENUM Resp (SIP URI)) in Step 406 to Step 407 is the domain name of the subscriber B in the local PSTN;
   the service location query (SRV Query (SRV domain name)) in Step 407 to Step 408 is the domain name of the subscriber B in the local PSTN;
   the service location result (SRV Resp (B host name and port)) in Step 408 to Step 409 is a name and a port of a Media Gateway Control Function (MGCF) providing service for the subscriber B in the local PSTN;
   the domain name location query (DNS Query (B host name)) in Step 409 to Step 410 is the name and the port of the MGCF providing service for the subscriber B in the local PSTN; and
   the query result (DNS Answer (B domain IP)) in Step 410 is the IP address of the MGCF providing service for the subscriber B in the PSTN;
Step 411: the S-CSCF (O) in the home domain of the subscriber A routes the call request (INVITE (SDPA)) of the subscriber A to the MGCF for the subscriber B in the local PSTN according to the IP address of the MGCF for the subscriber B included in the received query result (DNS Answer (B domain IP)); and
Step 412: the MGCF in the local PSTN sends an Initial Address Message (IAM) to a Circuit Switched (CS) domain to perform the subsequent process of this call.

Finally, in the condition that a local IMS subscriber calls a non-local PSTN subscriber:

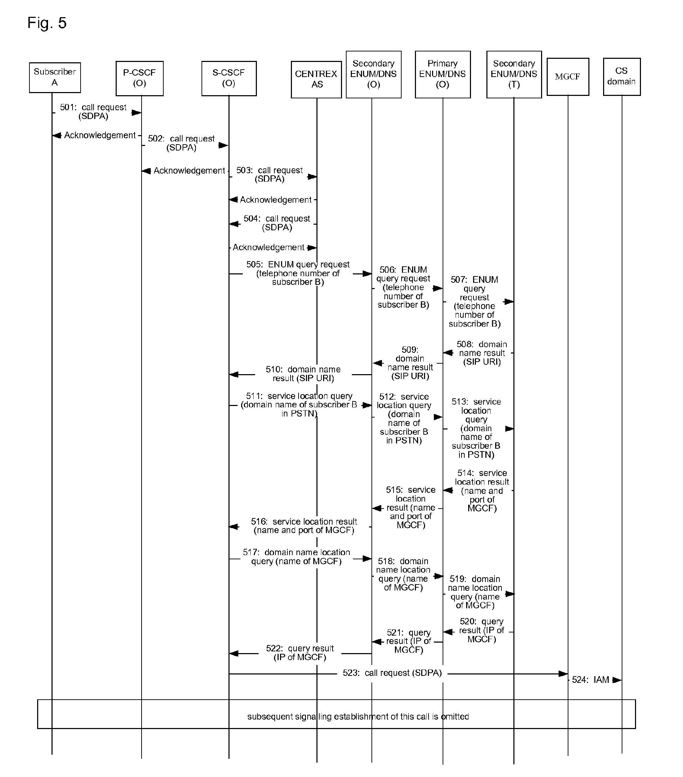

As shown in Fig. 5, a subscriber A is an IMS subscriber accessed with SIP mode, and a subscriber B is a non-local PSTN subscriber. When the local IMS subscriber calls the non-local PSTN subscriber, the secondary ENUM/DNS server of the home domain of the IMS subscriber A may accurately identify that a region code dialled by the subscriber A is a non-local region code, and may cooperate together with the primary ENUM/DNS server and the secondary ENUM/DNS server of the home domain of the subscriber B to perform a query of called number information, assist the IMS network elements to perform determination of called information, and route the call to the PSTN domain in which the subscriber B is located, wherein the specific flow is as follows:
Step 501 to Step 522: it is almost the same as Step 301 to Step 322, wherein the differences are as follows:
the domain name result (ENUM Resp (SIP URI)) in Step 508 to Step 511 is the domain name of the subscriber B in the PSTN;
the service location query (SRV Query (SRV domain name)) in Step 511 to Step 514 is the domain name of the subscriber B in the PSTN;
the service location result (SRV Resp (B host name and port)) in Step 514 to Step 517 is a name and a port of an MGCF providing service for the subscriber B in the PSTN;
the domain name location query (DNS Query (B host name)) in Step 517 to Step 520 is the name and port of the MGCF providing service for the subscriber B in the PSTN;
the query result (DNS Answer (B domain IP)) in Step 520 to Step 522 is the IP address of the MGCF providing service for the subscriber B in the PSTN; and
Step 523 to Step 524, it is totally the same as Step 411 to Step 412.

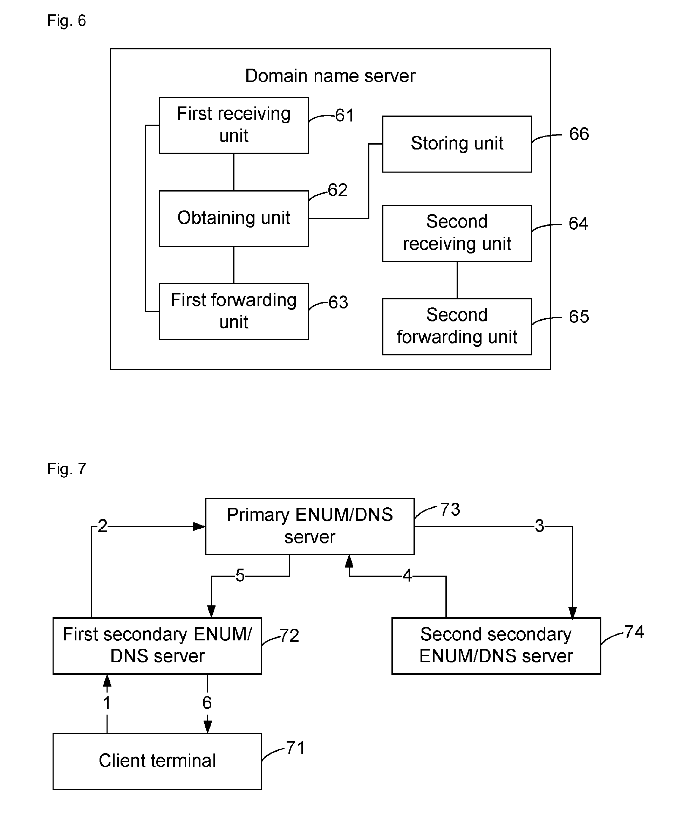

The domain name server of the present disclosure is applied to the IMS core network. Referring to Fig. 6, the domain name server of the present disclosure mainly includes: a first receiving unit 61 configured to receive a query request, sent from a secondary domain name server of the initiator, for a non-local domain subscriber; an obtaining unit 62 configured to obtain an IP address of a secondary domain name server of a home domain of the subscriber according to the query request received by the first receiving unit; a first forwarding unit 63 configured to forward the query request received by the first receiving unit to the secondary domain name server of the home domain of the subscriber according to the IP address obtained by the obtaining unit; a second receiving unit 64 configured to receive an inquired query result returned by the secondary domain name server of the home domain of the subscriber; and a forwarding unit 65 configured to forward the query result received by the second receiving unit to the secondary domain name server of the initiator.

Here, the query request includes the telephone number of the subscriber; the domain name server may further include a storing unit 66 configured to store a correspondence table including correspondence between telephone numbers of all subscribers and IP addresses of secondary domain name servers of home domains of all subscribers.

The correspondence table records a corresponding relationship between number segments or region codes of the telephone numbers of all subscribes and IP addresses of secondary domain name servers of home domains of all subscribers.

The obtaining unit 62 is specifically configured to find the IP address of the secondary domain name server of the home domain of the subscriber from the correspondence table including correspondence between the telephone numbers of all subscribers and the IP addresses of secondary domain name servers of home domains of all subscribers stored in the storing unit 66, according to the telephone number of the subscriber included in the query request received by the first receiving unit, to obtain the IP address of the secondary domain name server of the home domain of the subscriber.

For example, if a non-Beijing fixed line subscriber calls a Beijing fixed line subscriber, and the telephone number of the Beijing fixed line subscriber is tel:+861012345678, the IP address of the secondary domain name server in Beijing is found, according to the region code 10, from the correspondence table, stored in the storage unit 66, including correspondence between the region code of the telephone number and the IP address of the secondary domain name server in each region, and the query request is then forwarded to the secondary domain name server in Beijing according to the obtained IP address.

For a mobile subscriber, a mobile number of each province has a different number segment, and a correspondence table including correspondence between the number segment of a mobile number in each province and an IP address of a secondary domain name server in the each province is generally stored in the storing unit 66. For example, if a non-Beijing subscriber calls a Beijing mobile subscriber, and the mobile number of the Beijing mobile subscriber is tel:+8613913812345, the IP address of the secondary domain name server in Beijing is found, according to the number segment of the mobile number, from the correspondence table, stored in the storage unit 66, including correspondence between the number segment of the mobile number in each province and the IP address of the secondary domain name server in each province, and the query request is then forwarded to the secondary domain name server in Beijing according to the found IP address.

Here, in the domain name server, the first receiving unit 61 is further configured to receive a service location query sent by the secondary domain name server of the initiator after the secondary domain name server of the initiator receives the domain name result; and receive a domain name location query sent by the secondary domain name server of the initiator after the secondary domain name server of the initiator receives the service location result.

The first forwarding unit 63 is further configured to forward the service location query received by the first receiving unit 61 to the secondary domain name server of the home domain of the subscriber according to the IP address obtained by the obtaining unit 62; and forward the domain name location query received by the first receiving unit 61 to the secondary domain name server of the home domain of the subscriber according to the IP address obtained by the obtaining unit 62.

The second receiving unit 64 is specifically configured to receive a domain name result returned from the secondary domain name server of the home domain of the subscriber after the first forwarding unit 63 forwards the query request to the secondary domain name server of the home domain of the subscriber; receive a service location result returned from the secondary domain name server of the home domain of the subscriber after the first forwarding unit 63 forwards the service location query to the secondary domain name server of the home domain of the subscriber; and receive a query result which is returned from the secondary domain name server of the home domain of the subscriber and includes the IP address of the host providing service in the home domain of the subscriber after the first forwarding unit 63 forwards the domain name location query to the secondary domain name server of the home domain of the subscriber.

The second forwarding unit 65 is specifically configured to forward the domain name result to the secondary domain name server of the initiator when the second receiving unit 64 receives the domain name result; forward the service location result to the secondary domain name server of the initiator when the second receiving unit 64 receives the service location result; and forward the query result to the secondary domain name server of the initiator when the second receiving unit 64 receives the query result.

Here, the secondary domain name server of the home domain of the subscriber may include: a domain name query processing unit configured to perform a domain name query, after receiving the query request sent by the first forwarding unit 63, obtain a domain name result including a domain name of the home domain of the subscriber, and return the domain name result to the second receiving unit 64; a service location query processing unit configured to perform the service location query, after receiving the service location query sent by the first forwarding unit 63, to obtain a service location result including the name of the host providing service in the home domain of the subscriber, and return the service location result to the second receiving unit 64; a domain name location query processing unit configured to perform the domain name location query after receiving the domain name location query, obtain a query result including the IP address of the host providing service in the home domain of the subscriber, and return the query result to the second receiving unit 64.

Here, the secondary domain name server of the initiator may include a third receiving unit, a determining unit, a querying unit, a sending unit, a fourth receiving unit, and an another sending unit. The third receiving unit is configured to receive the query request, including the telephone number of the subscriber, sent from a client terminal; the determining unit is configured to determine whether the subscriber is a local domain subscriber according to the telephone number included in the query request received by the third receiving unit, if the subscriber is a local domain subscriber, enable the querying unit, and if the subscriber is not a local domain subscriber, enable the sending unit; the querying unit is configured to perform query process of the query request to obtain the query result including the IP address of the host providing service for the subscriber; the sending unit is configured to send the query request received by the first receiving unit to the first receiving unit 61 in the domain name server, wherein the first receiving unit 61 can be configured to forward the query request to the secondary domain name server of the home domain of the subscriber; the fourth receiving unit is configured to receive the query result which is forwarded by the second forwarding unit 64 of the domain name server and includes the IP address of the host providing service for the subscriber after the forwarding unit forwards the query request; and the another sending unit is configured to send the query result obtained by the querying unit or received by the second receiving unit to the client terminal.

Here, each of the secondary domain name server of the initiator and the secondary domain name server of the home domain of the subscriber may be a secondary ENUM/DNS server which is configured to manage the telephone number of the subscriber in its domain and the corresponding domain name and provide the name and the IP address of the host providing service.

The determining unit in the secondary domain name server of the initiator determines whether a subscriber is a local domain subscriber in the following way: when the telephone number is a fixed-line telephone number, the determining unit determines whether the subscriber is a subscriber in its domain according to a region code in the telephone number; when the telephone number is a mobile number, the determining unit determines whether the subscriber is a local domain subscriber according to a number segment in the telephone number;

The present disclosure will be further illustrated in detail by taking a domain name server system shown in Fig. 7 as example hereinafter.

As shown in Fig. 7, two levels of ENUM/DNS servers with different functions are set in the domain name server system in the example, wherein the primary ENUM/DNS server is configured to perform forwarding of the query request and the query result; and each secondary ENUM/DNS server is configured to perform query process of the telephone number of the subscriber in its domain.

Firstly, a client terminal 71 sends a query request 1 to a first secondary ENUM/DNS server 72, wherein the query request 1 includes a telephone number of a subscriber.

Secondly, after receiving the query request 1 of the client terminal, the first secondary ENUM/DNS server 72 determines whether the telephone number in the query request 1 is a local number, if yes, the first secondary ENUM/DNS server 72 directly returns to the client terminal a query result 6 including the IP address of the host providing service for the subscriber; otherwise, the first secondary ENUM/DNS server 72 sends the query request 1 to the primary ENUM/DNS server 73;

Here, the specific process that the first secondary ENUM/DNS server 72 sends the query request 1 to the primary ENUM/DNS server 73 may include: packaging the query request 1 into a query packet 2 in which a source address is set as an address of the secondary ENUM/DNS server 72 and a destination address is set as an address of the primary ENUM/DNS server 73, and then sending the query packet 2 to the primary ENUM/DNS server 73.

Thirdly, the primary ENUM/DNS server 73 then forwards the query request 1 to a second ENUM/DNS server 74 for the home domain of the subscriber, wherein the specific forwarding process may include that:

After receiving the query packet 2, the primary ENUM/DNS server 73 resolves the query request 1 in the query packet 2 and obtains the IP address of the second secondary ENUM/DNS server 74 for the home domain of the subscriber according to a region code or a number segment of the telephone number in the query request 1, reserves both the IP address of the first secondary ENUM/DNS server 72 and the query request 1 in the query packet 2, replaces the source address in the query packet 2 with the address of the primary ENUM/DNS server 73 and replaces the destination address with the address of the second secondary ENUM/DNS server 74 to recombine the query packet 2 into a query packet 3, and then sends the query packet 3 to the second secondary ENUM/DNS server 74.

Fourthly, the second secondary ENUM/DNS server 74 receives the query request 1 forwarded by the primary ENUM/DNS server 73, performs query process to obtain a query result 4 including the IP address of the host providing service for the subscriber, and returns the query result 4 to the primary ENUM/DNS server 73.

Fifthly, the primary ENUM/DNS server 73 forwards the received query result 4 to the first secondary ENUM/DNS server 72, wherein the specific forwarding process is as follows:

After receiving the query result 4, the primary ENUM/DNS server 73 packages the query result 4 into a query result packet 5 in which the source address is set as the address of the primary ENUM/DNS server 73 and the destination address is alternatively set as the address of the first secondary ENUM/DNS server 72, and returns the query result packet 5 to the first secondary ENUM/DNS server 72.

Finally, the first secondary ENUM/DNS server 72 sends the query result 4 to the client terminal, wherein the specific process is as follows:

The first secondary ENUM/DNS server 72 receives the query result packet 5, replaces the source address and the destination address in the query result packet 5 correspondingly, then recombines the query result packet 5 into a query result packet 6, and sends the query result packet 6 to the client terminal.

The query request is in a form of udp message in the network, i.e., it is an udp data packet.

In the practical applications, a secondary domain name server can be set in each province of the whole nation to perform query process of a telephone number in the local province, and a primary domain name server can be headquartered for the whole nation to perform forwarding of a query request and a query result between secondary domain name servers of provinces, so that the primary domain name server and the secondary domain name servers in the national domain name server system may perform a query process by explicit collaboration and division of work, consequently, stability and response speed of the domain name server system is effectively improved.

The above is only the preferred embodiments of the present disclosure and is not intended to limit the protection scope of the present disclosure. Any modification, equivalent substitution and improvement within the principle of the present disclosure are deemed to be included within the protection scope of the present disclosure.

## Claims

1. A domain name processing method, comprising:
receiving a query request, sent by a secondary domain name server of an initiator, for a non-local domain subscriber;
obtaining an IP address of a secondary domain name server of a home domain of the subscriber according to the query request;
forwarding the query request to the secondary domain name server of the home domain of the subscriber according to the obtained IP address; and
forwarding a query result returned from the secondary domain name server of the home domain of the subscriber to the secondary domain name server of the initiator when the query result is received.

2. The domain name processing method according to claim 1, wherein the query request comprises a telephone number of the subscriber;
the step of obtaining the IP address of the secondary domain name server of the home domain of the subscriber according to the query request comprises: finding the IP address of the secondary domain name server of the home domain of the subscriber from a stored correspondence table including correspondence between telephone numbers of all subscribers and IP addresses of secondary domain name servers of home domains of all subscribers according to the telephone number comprised in the query request so that the IP address is obtained.

3. The domain name processing method according to claim 1 or 2, wherein after the step of forwarding the query request to the secondary domain name server of the home domain of the subscriber and before the query result is received,
receiving a domain name result returned from the secondary domain name server of the home domain of the subscriber, and forwarding the domain name result to the secondary domain name server of the initiator;
forwarding a received service location query sent by the secondary domain name server of the initiator to the secondary domain name server of the home domain of the subscriber according to the obtained IP address;
receiving a service location result returned from the secondary domain name server of the home domain of the subscriber, and forwarding the service location result to the secondary domain name server of the initiator;
forwarding a received domain name location query sent by the secondary domain name server of the initiator to the secondary domain name server of the home domain of the subscriber according to the obtained IP address; and
receiving the query result which is returned from the secondary domain name server of the home domain of the subscriber and includes an IP address of a host providing service in the home domain of the subscriber.

4. The domain name processing method according to claim 3, wherein processes of the secondary domain name server of the home domain of the subscriber comprise:
performing, by the secondary domain name server of the home domain of the subscriber, a domain name query to obtain the domain name result including a domain name of the home domain of the subscriber, after receiving the query request;
performing, by the secondary domain name server of the home domain of the subscriber, the service location query to obtain the service location result including a name of the host providing service in the home domain of the subscriber, after receiving the service location query; and
performing, by the secondary domain name server of the home domain of the subscriber, the domain name location query to obtain the query result including the IP address of the host providing service in the home domain of the subscriber, after receiving the domain name location query.

5. The domain name processing method according to claim 1, further comprising: before the step of receiving the query request, sent by the secondary domain name server of the initiator, for the non-local domain subscriber,
receiving, by the secondary domain name server of the initiator, a query request, including a telephone number of the subscriber, sent from a client terminal;
determining, by the secondary domain name server of the initiator, whether the subscriber is a local domain subscriber according to the telephone number included in the query request;
accomplishing, by the secondary domain name server of the initiator, the domain name processing to obtain a query result including an IP address of a host providing service in the local domain, and returning, by the secondary domain name server of the initiator, the query result to the client terminal, when the subscriber is a local domain subscriber;
sending, by the secondary domain name server of the initiator, the query request, and returning, by the secondary domain name server of the initiator, a query result to the client terminal after receiving the query result, when the subscriber is not a local domain subscriber.

6. A domain name server, comprising:
a first receiving unit configured to receive a query request, sent by a secondary domain name server of an initiator, for a non-local domain subscriber;
an obtaining unit configured to obtain an IP address of a secondary domain name server of a home domain of the subscriber according to the query request received by the first receiving unit;
a first forwarding unit configured to forward the query request received by the first receiving unit to the secondary domain name server of the home domain of the subscriber according to the IP address obtained by the obtaining unit;
a second receiving unit configured to receive an inquired query result returned by the secondary domain name server of the home domain of the subscriber; and
a second forwarding unit configured to forward the query result received by the second receiving unit to the secondary domain name server of the initiator.

7. The domain name server according to claim 6, wherein the query request comprises a telephone number of the subscriber;
the domain name server further comprises a storing unit configured to store a correspondence table including correspondence between telephone numbers of all subscribers and IP addresses of secondary domain name servers of home domains of all subscribers;
the obtaining unit is further configured to find the IP address of the secondary domain name server of the home domain of the subscriber from the correspondence table stored in the storing unit according to the telephone number of the subscriber included in the query request received by the first receiving unit, to obtain the IP address of the secondary domain name server of the home domain of the subscriber.

8. The domain name server according to claim 6 or 7, wherein in the domain name server, the first receiving unit is further configured to
receive a service location query sent by the secondary domain name server of the initiator; and
receive a domain name location query sent by the secondary domain name server of the initiator.

9. The domain name server according to claim 8, wherein in the domain name server, the first forwarding unit is further configured to:
forward the service location query received by the first receiving unit to the secondary domain name server of the home domain of the subscriber according to the IP address obtained by the obtaining unit; and
forward the domain name location query received by the first receiving unit to the secondary domain name server of the home domain of the subscriber according to the IP address obtained by the obtaining unit.

10. The domain name server according to claim 9, wherein in the domain name server, the second receiving unit is further configured to:
receive a domain name result returned from the secondary domain name server of the home domain of the subscriber;
receive a service location result returned from the secondary domain name server of the home domain of the subscriber; and
receive a query result which is returned from the secondary domain name server of the home domain of the subscriber and includes the IP address of a host providing service in the home domain of the subscriber.

11. The domain name server according to claim 10, wherein in the domain name server, the second forwarding unit is further configured to:
forward the domain name result received by the second receiving unit to the secondary domain name server of the initiator;
forward the service location result received by the second receiving unit to the secondary domain name server of the initiator; and
forward the query result received by the second receiving unit to the secondary domain name server of the initiator.

12. The domain name server according to claim 8, wherein the secondary domain name server of the home domain of the subscriber comprises:
a domain name query processing unit configured to perform a domain name query, after receiving the query request sent by the first forwarding unit, obtain a domain name result including a domain name of the home domain of the subscriber, and return the domain name result to the second receiving unit of the domain name server;
a service location query processing unit configured to perform the service location query, after receiving the service location query forwarded by the first forwarding unit, to obtain a service location result including a name of a host providing service in the home domain of the subscriber, and return the service location result to the second receiving unit of the domain name server; and
a domain name location query processing unit configured to perform the domain name location query, after receiving the domain name location query forwarded by the first forwarding unit, to obtain a query result including an IP address of the host providing service in the home domain of the subscriber, and return the query result to the second receiving unit of the domain name server.

13. The domain name server according to claim 6, wherein the secondary domain name server of the initiator comprises a third receiving unit, a determining unit, a querying unit, a sending unit, a fourth receiving unit, and an another sending unit; wherein
the third receiving unit is configured to receive a query request, including a telephone number of the subscriber, sent from a client terminal;
the determining unit is configured to determine whether the subscriber is a local domain subscriber according to the telephone number included in the query request received by the third receiving unit, if the subscriber is a local domain subscriber, enable the querying unit, if the subscriber is a non-local domain subscriber, enable the sending unit;
the querying unit is configured to perform query process of the query request to obtain the query result;
the sending unit is configured to send the query request;
the fourth receiving unit is configured to receive the query result; and
the another sending unit is configured to send the query result obtained by the querying unit or received by the fourth receiving unit to the client terminal.
